# EUROPEAN PATENT APPLICATION

(11) **EP 3 483 628 A1**
(43) Date of publication of application: **15.05.2019**
(21) Application number: 17824000.8
(22) Date of filing: 21.06.2017
(51) Int. Cl.: G01S 7/497, G01S 17/89, G02B 26/10, G02B 26/12

(54) **LASER RADAR DEVICE**

(30) Priority: 07.07.2016 JP 2016134649
(71) Applicant: Konica Minolta, Inc., Tokyo 100-7015 (JP)
(72) Inventor: NOMURA, Shunsuke, Tokyo 100-7015 (JP); IDE, Yoshinori, Tokyo 100-7015 (JP)
(74) Representative: Gille Hrabal
(86) International application number: PCT/JP2017/022770
(87) International publication number: WO 2018/008393

(57) **Abstract**

According to the present invention, even if an azimuth angle synchronized to laser light scanning on each reflecting surface of a polygon mirror differs as a result of variations in the speed of rotation during one rotation, distance image data in which said differences are rectified can be generated. This laser radar device is provided with a rotation detecting means (boss S and photo-interrupter 3) which detects the rotational phase of a polygon mirror (P) at a plurality of detecting locations in a circumferential direction, and a correcting means (FPGA 11) which corrects distance image data on the basis of the detection results from the rotation detecting means, wherein the correcting means effects correction in such a way as to reduce a mutual discrepancy in an azimuth angle around an axis of rotation between data in a range scanned using one reflecting surface and data in a range scanned using another reflecting surface. The number of provided detecting locations is an integral multiple of the number of reflecting surfaces that are arranged in the circumferential direction of the polygon mirror. A sector time period from detection at one detecting location to detection at the next detecting location is measured, and the correction amount is determined in accordance with the length of the sector time period.

## Description

### Technical Field

The present invention relates to a laser radar device.

### Background Art

There is utilized a laser radar device which scans a laser beam(s) using a rotating polygon mirror, thereby detecting an ambient environment three-dimensionally.

The polygon mirror has a plurality of reflection plates in a circumferential direction of rotation, the reflection plates of the polygon mirror arranged side by side in the circumferential direction are different from one another in a depression/elevation, and scanning areas are different but continuous vertically (in a rotation axis direction) by the laser beam being reflected by the reflection plates which are different in the depression/elevation. By stacking up data obtained by scanning with the respective reflection plates on top of one another, data of the whole area is obtained by one rotation of the polygon mirror.

Ideally, a laser beam scanning timing synchronizes with an azimuth around a rotation axis of a reflection plate which reflects the laser beam. For that, ideally, a rotation period of the polygon mirror is uniform. If one rotation of the polygon mirror at a certain point of time and the next one rotation are different from one another in terms of time (period), the scanning timing(s) and the azimuth(s) are off from one another, and an object at a fixed position viewed from the laser radar device looks as if it has moved. The invention described in Patent Literature 1 is for dealing with such change in the rotation period of the polygon mirror being longer or shorter. For that, a start timing of an irradiation unit is changed according to the rotation period calculated by a period calculation unit, such that the azimuth to start emission of probe waves is uniform in scanning (claim 1 of Patent Literature 1), or a period difference calculation unit which calculates a period difference between the rotation period and a set period is provided, and the calculation result by the period difference calculation unit is output together with a detection result by a receiving unit which receives the probe waves (claim 8 of Patent Literature 1).

### Citation List

### Patent Literature

Patent Literature 1: JPH 11-84006

### Summary of Invention

### Technical Problem

However, even if the rotation period of the polygon mirror is uniform, a rotational speed during one rotation may vary by disturbance, such as vibrations or lateral acceleration. That is, even if a period of time for one rotation of the polygon mirror is uniform, there is change during one rotation. For example, the rotational speed becomes faster or slower by vibrations, or the rotational speed gradually decreases or increases by lateral acceleration.

In such a case, a difference is generated between the azimuth at the time of scanning with a first reflection plate, and the azimuth at the time of scanning with a second reflection plate. For example, a vertical bar, which stands vertically, is divided into an upper portion and a lower portion at the border between an area scanned by the first reflection plate and an area scanned by the second reflection plate, and a phenomenon in which deviation thereof in the horizontal direction occurs.

The invention described in Patent Literature 1 does not do anything as long as the rotation period of the polygon mirror is uniform, and hence cannot make things better with respect to problems caused by change in the rotational speed of the polygon mirror during one rotation

The present invention has been conceived in view of the problems of the conventional technology, and objects of the present invention include providing a laser radar device which, even if the azimuth synchronizing with the laser beam scanning by each reflection plate of a polygon mirror differs by change in the rotational speed of the polygon mirror during one rotation, can generate distance image data in which the difference has been rectified.

### Solution to Problem

In order to solve the above problem(s), the present invention described in claim 1 is a laser radar device which includes a rotating polygon mirror, and scans a laser beam over and outputs the laser beam to an object with the polygon mirror, and detects a distance to the object based on a reception signal of the laser beam reflected by and returned from the object, thereby obtaining distance image data, wherein
the polygon mirror has a plurality of reflection plates in a circumferential direction of rotation, the reflection plates arranged side by side in the circumferential direction are different from one another in a depression/elevation, and areas over which the laser beam is scanned are different but continuous in a rotation axis direction by the laser beam being reflected by the reflection plates which are different in the depression/elevation, and
the laser radar device includes: a rotation detection unit which detects a rotation phase of the polygon mirror at a plurality of detection locations in the circumferential direction; and a correction unit which corrects the distance image data based on a result of the detection by the rotation detection unit, wherein the correction unit performs the correction so as to reduce a difference in an azimuth around a rotation axis between data of an area scanned by one reflection plate and data of an area scanned by another reflection plate.

The present invention described in claim 2 is the laser radar device according to claim 1, wherein a number of the detection locations arranged is an integral multiple of a number of the reflection plates arranged side by side in the circumferential direction of the polygon mirror, and the detection locations are arranged at predetermined intervals in the circumferential direction.

The present invention described in claim 3 is the laser radar device according to claim 1 or 2, wherein the correction unit measures, based on the result of the detection by the rotation detection unit, a sector period from detection at one detection location to detection at a next detection location, determines a correction amount according to a length of the sector period, and corrects, based on the correction amount, the distance image data obtained in the sector period.

### Advantageous Effects of Invention

According to the present invention, even if the azimuth synchronizing with the laser beam scanning by each reflection plate of a polygon mirror differs by change in the rotational speed of the polygon mirror during one rotation, distance image data in which the difference has been rectified can be generated.

### Brief Description of the Drawings

FIG. 1 is a hardware layout drawing of a laser radar device according to an embodiment of the present invention.
FIG. 2 is a circuit block diagram of the laser radar device according to an embodiment of the present invention.
FIG. 3A is a schematic view of an image of a vertical bar in distance image data in a case where there is no change in a rotational speed of a polygon mirror during one rotation.
FIG. 3B is a schematic view of an image of the vertical bar in distance image data in a case where the rotational speed of the polygon mirror during one rotation becomes faster or slower by vibrations.
FIG. 3C is a schematic view of an image of the vertical bar in distance image data in a case where the rotational speed of the polygon mirror during one rotation gradually decreases or increases by lateral acceleration.
FIG. 4A is a layout drawing of bosses which are elements of a rotation detection unit provided in the laser radar device, wherein the number of the bosses is four, according to an embodiment of the present invention.
FIG. 4B is a layout drawing of the bosses which are the elements of the rotation detection unit provided in the laser radar device, wherein the number of the bosses is eight, according to an embodiment of the present invention.
FIG. 5A is a schematic view showing distance image data before correction in a distance measurement device according to an embodiment of the present invention.
FIG. 5B is a schematic view showing distance image data after the correction in the distance measurement device according to an embodiment of the present invention.

### Description of Embodiments

Hereinafter, an embodiment(s) of the present invention will be described with reference to the drawings. The following is an embodiment(s) of the present invention, and not intended to limit the present invention.

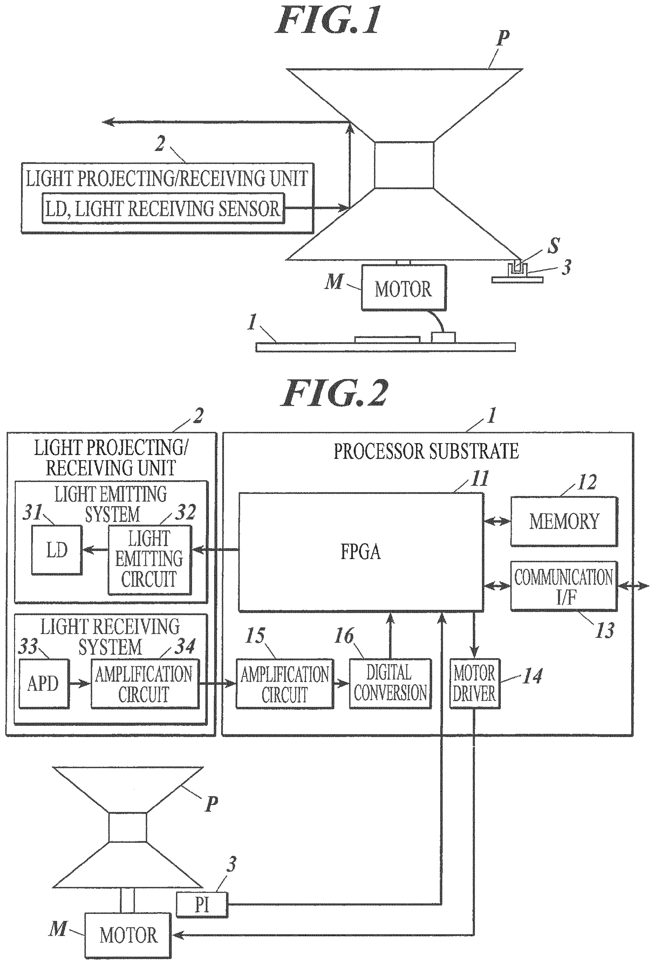

FIG. 1 is a hardware layout drawing of a laser radar device according to this embodiment viewed in a direction perpendicular to a rotation axis of a polygon mirror P.

As shown in FIG. 1, the laser radar device of this embodiment includes a processor substrate 1, a polygon drive motor M, a light projecting/receiving unit 2, a photo-interrupter 3, the polygon mirror P, and bosses S for rotation phase detection. The photo-interrupter 3 and the bosses S constitute a rotation detection unit.

As shown in FIG. 2, the processor substrate 1 includes an information processing circuit (field-programmable gate array or FPGA) 11, a memory 12, a communication interface 13, a motor driver 14, an amplification circuit 15 for light reception signals, and a digital conversion circuit 16; the light projecting/receiving unit 2 includes a laser diode 31, a light emitting circuit 32 therefor, an avalanche photodiode 33 as a light receiving element, and an amplification circuit 34 for light reception signals therefrom; and together with the polygon drive motor M and the photo-interrupter 3, they constitute the present device with an output/input relationship shown in FIG. 2.

The bosses S are provided so as to project from an end face of the polygon mirror P in a rotation axis direction thereof. The bosses S are arranged a certain distance away from a rotation axis of the polygon mirror P, and arranged so as to pass through an optical path of the photo-interrupter 3 as the polygon mirror P rotates.

The polygon mirror P of this embodiment has four reflection planes in a circumferential direction of rotation. The number of the reflection planes in the circumferential direction is an example, and hence may be three, or five or more. The polygon mirror shown in FIG. 1 is configured to reflect a laser beam(s) twice (twice at the time of output, and twice at the time of light reception) with a pair of an upper reflection plane(s) and a lower reflection plane(s), but not limited thereto, and may be configured to reflect the laser beam once (once at the time of output, and once at the time of light reception) with a structure which is not a pair of an upper reflection plane(s) and a lower reflection plane(s).

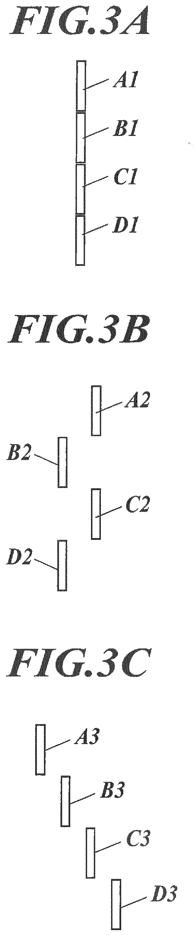

In the polygon mirror P, the reflection plates arranged side by side in the circumferential direction are different from one another in a depression/elevation (angle with respect to the rotation axis), and areas over which the laser beam is scanned are different but continuous in the rotation axis direction by the laser beam being reflected by the reflection plates which are different in the depression/elevation. Hence, if the present device scans a vertical bar, which vertically stands at a fixed position with respect to the present device, as shown in FIG. 3A, it is divided upward and downward into a portion A1 scanned by a first reflection plate, a portion B1 scanned by a second scanning plate, a portion C1 scanned by a third scanning plate, and a portion D1 scanned by a fourth scanning plate. By stacking up data obtained by scanning with the respective reflection plates on top of one another, data of the whole area is obtained by one rotation of the polygon mirror.

However, the case shown in FIG. 3A is an ideal case in which the laser beam scanning timings synchronize with the azimuths of the respective reflection plates around the rotation axis, the reflection plates reflecting the laser beam.

If a rotational speed of the polygon mirror P during one rotation becomes faster or slower by vibrations applied to the present device, as shown in FIG. 3B, the detected portions (A2, B2, C2 and D2) of the vertical bar deviate in the horizontal direction.

If the rotational speed of the polygon mirror P during one rotation gradually decreases or increases by lateral acceleration applied to the present device, as shown in FIG. 3C, the detected portions (A3, B3, C3 and D4) of the vertical bar deviate in the horizontal direction.

The present invention corrects such deviation(s) in the horizontal direction.

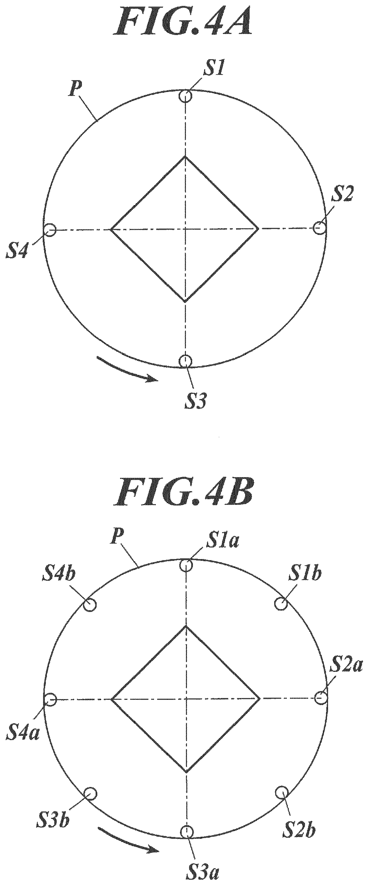

For that, as shown in FIG. 4A and FIG. 4B, the number of the bosses provided is an integral multiple of the number of the reflection plates arranged side by side in the circumferential direction, and the bosses are arranged at regular intervals in the circumferential direction.

For example, as shown in FIG 4A, four bosses S1 to S4, the number of which is the same (one time) as the number of the reflection plates in the circumferential direction, are arranged at regular intervals of 90°.

As another example, as shown in FIG 4B, eight bosses S1a, S1b to S4a, S4b, the number of which is double the number of the reflection plates in the circumferential direction, are arranged at regular intervals of 45°.

In FIG. 4A, the rotation direction of the polygon mirror P is counterclockwise, and the photo-interrupter 3 is arranged such that, in an ideal state in which the rotational speed of the polygon mirror P is uniform at a reference value, a scanning period with the laser beam by the first reflection plate is within a sector period which is from when the photo-interrupter 3 detects the boss S1 to when the photo-interrupter 3 detects the next boss S2. That is, change in the rotational speed of the polygon mirror P in the period in which the first reflection plate scans the laser beam can be known from the sector period from the boss S1 to the next boss B2. The same applies to the second to fourth reflection plates.

Because change in the speed (time) within one sector cannot be detected, processing is on the assumption that the speed is uniform. Hence, increasing rotation phase detection resolution is effective.

Compared with FIG. 4A, in FIG. 4B, the rotation phase detection resolution is increased, and the scanning period by one reflection plate is divided in two, so that change in the rotational speed of the polygon mirror P during each division can be known. By further increasing the number of the bosses to 16, 32, ... or so, the scanning period by one reflection plate is finely divided, and length of time (period) per sector can be known.

The information processing circuit (FPGA) 11 constitutes a correction unit, and the information processing circuit (FPGA) 11 corrects distance image data into which input signals from the digital conversion circuit 16 are converted, by performing a mathematical operation(s) by the following theory, on the basis of results of detection by the rotation detection unit input from the photo-interrupter 3.

The case in which, of the vertical bar, the detected portions (A2, B2, C2 and D2) which should have been at the same position in the horizontal direction deviate in the horizontal direction by vibrations applied to the present device is taken as an example. The bosses are the four bosses shown in FIG. 4A.

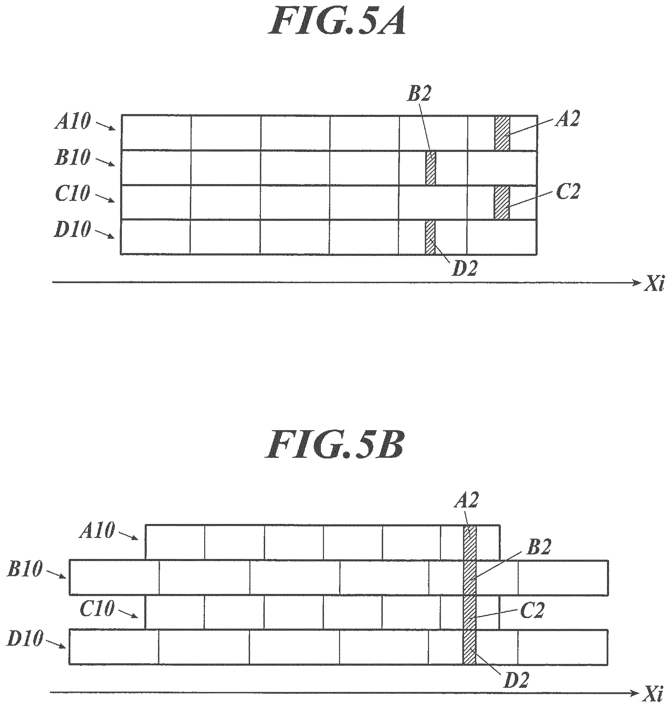

A belt A10 in FIG. 5A shows distance image data obtained by scanning with the first reflection plate. One block thereof indicates a predetermined pixel unit. Similarly, a belt B10 shows distance image data obtained by scanning with the second reflection plate, a belt C10 shows distance image data obtained by scanning with the third reflection plate, and a belt D10 shows distance image data obtained by scanning with the fourth reflection plate. The horizontal axis Xi indicates horizontal coordinates on an image.

In distance image data of the whole area generated by stacking up the belts A10, B10, C10 and D10 on top of one another, the detected portions (A2, B2, C2 and D2) of the vertical bar deviate in the horizontal direction and appear.

The information processing circuit (FPGA) 11 determines the amount of correction (correction amount) according to the length of the sector period from the boss S1 to the boss S2 in which the scanning period by the first reflection plate is included, the first reflecting plate having scanned the laser beam, so that the belt A10 has been obtained. If the sector period is long, conversion to a short one is performed. Here, it is assumed that the sector period corresponding to the belt A10 is longer than a reference period. Hence, as shown in FIG 5B, the belt A10 is converted to a short belt. The conversion rate is in accordance with the ratio of the sector period to the reference period. The sector period being longer than the reference period means that the rotational speed of the polygon mirror P is lower than the reference value, and accordingly means that a swing angle of the polygon mirror P in the scanning period with the laser beam when the belt A10 has been obtained is smaller than a reference value. Hence, the belt A10 is converted so as to correspond to the actual swing angle thereof, thereby being made to be close to a real image.

The information processing circuit (FPGA) 11 determines the correction amount according to the length of the sector period from the boss S2 to the boss S3 in which the scanning period by the second reflection plate is included, the second reflecting plate having scanned the laser beam, so that the belt B10 has been obtained. If the sector period is short, conversion to a long one is performed. Here, it is assumed that the sector period corresponding to the belt B10 is shorter than the reference period. Hence, as shown in FIG. 5B, the belt B10 is converted to a long belt. The conversion rate is in accordance with the ratio of the sector period to the reference period. The sector period being shorter than the reference period means that the rotational speed of the polygon mirror P is higher than the reference value, and accordingly means that the swing angle of the polygon mirror P in the scanning period with the laser beam when the belt B10 has been obtained is larger than the reference value. Hence, the belt B10 is converted so as to correspond to the actual swing angle thereof, thereby being made to be close to a real image.

Similarly, the length of each of the belt C10 and the belt D10 in the horizontal direction is converted, so that, as shown in FIG. 5B, distance image data of the whole area is obtained. As needed, quadrilateral cutting-out or pixel reduction is performed, and extraction is performed.

As shown in FIG. 5B, the deviation in the horizontal direction of the detected portions (A2, B2, C2 and D2) of the vertical bar is eliminated or reduced.

Thus, the information processing circuit (FPGA) 11 performs the correction so as to reduce the difference in the azimuth around the rotation axis between data of an area scanned by one reflection plate and data of an area scanned by another reflection plate.

The same correction is applicable to the case where the detected portions (A3, B3, C3 and D3) of the vertical bar deviate in the horizontal direction as shown in FIG. 3C.

By making the number of the bosses eight as shown in FIG. 4B, or further increasing the number of the bosses to 16, 32, ... or so, the same belt A10 can be divided in the horizontal direction, and the divisions can be converted in accordance with their respective swing angles of the polygon mirror P. That is, by increasing the resolution of the rotation detection unit, accuracy of the correction can be improved.

If the difference between the measured sector period and the reference period is equal to or smaller than a predetermined lower limit, the correction may not be performed, and the distance image data without the correction may be output as effective data.

Meanwhile, if the difference between the measured sector period and the reference period exceeds a predetermined upper limit, the distance image data may be regarded as ineffective data without the correction performed, and the present device may wait until rotation of the polygon mirror becomes stable, and the difference decreases to the upper limit or smaller.

### Industrial Applicability

The present invention is applicable to a laser radar device.

### Reference Signs List

- M: Polygon Drive Motor
- P: Polygon Mirror
- S: Boss
- 1: Processor Substrate
- 2: Light Projecting/Receiving Unit
- 3: Photo-interrupter

## Claims

1. A laser radar device which comprises a rotating polygon mirror, and scans a laser beam over and outputs the laser beam to an object with the polygon mirror, and detects a distance to the object based on a reception signal of the laser beam reflected by and returned from the object, thereby obtaining distance image data, wherein
the polygon mirror has a plurality of reflection plates in a circumferential direction of rotation, the reflection plates arranged side by side in the circumferential direction are different from one another in a depression/elevation, and areas over which the laser beam is scanned are different but continuous in a rotation axis direction by the laser beam being reflected by the reflection plates which are different in the depression/elevation, and
the laser radar device comprises: a rotation detection unit which detects a rotation phase of the polygon mirror at a plurality of detection locations in the circumferential direction; and a correction unit which corrects the distance image data based on a result of the detection by the rotation detection unit, wherein the correction unit performs the correction so as to reduce a difference in an azimuth around a rotation axis between data of an area scanned by one reflection plate and data of an area scanned by another reflection plate.

2. The laser radar device according to claim 1, wherein a number of the detection locations arranged is an integral multiple of a number of the reflection plates arranged side by side in the circumferential direction of the polygon mirror, and the detection locations are arranged at predetermined intervals in the circumferential direction.

3. The laser radar device according to claim 1 or 2, wherein the correction unit measures, based on the result of the detection by the rotation detection unit, a sector period from detection at one detection location to detection at a next detection location, determines a correction amount according to a length of the sector period, and corrects, based on the correction amount, the distance image data obtained in the sector period.
